# EUROPEAN PATENT APPLICATION

(11) **EP 4 030 544 A1**
(43) Date of publication of application: **20.07.2022**
(21) Application number: 20863678.7
(22) Date of filing: 08.09.2020
(51) Int. Cl.: H01M 50/40

(54) **BATTERY SEPARATOR, BATTERY, AND BATTERY PACK**

(30) Priority: 12.09.2019 CN 201910862204
(71) Applicant: BYD Company Limited, Shenzhen, Guangdong 518118 (CN)
(72) Inventor: WANG, Jianjun, Shenzhen, Guangdong 518118 (CN); HUI, Bingfei, Shenzhen, Guangdong 518118 (CN); JIANG, Zhixin, Shenzhen, Guangdong 518118 (CN); YIN, Xiaoqiang, Shenzhen, Guangdong 518118 (CN)
(74) Representative: Haseltine Lake Kempner LLP
(86) International application number: PCT/CN2020/114008
(87) International publication number: WO 2021/047505

(57) **Abstract**

A battery separator includes a separator body (10) and an insulating adhesive tape (20) attached to the separator body (10). The separator body (10) includes a first separator side (101) and a second separator side (102) disposed opposite to each other in a second direction, and includes a first separator end (103) and a second separator end (104) disposed opposite to each other in a first direction. The insulating adhesive tape (20) includes a first adhesive-tape side (201) and a second adhesive-tape side (202) disposed opposite to each other in the second direction, and includes a first adhesive-tape end (203) and a second adhesive-tape end (204) disposed opposite to each other in the first direction. The insulating adhesive tape (20) is attached to the separator body (10) in the first direction, and the first adhesive-tape side (201) is disposed at a position corresponding to the first separator side (101). The insulating adhesive tape (20) extends from the first separator end (103) to the second separator end (104) in the first direction.

## Description

### CROSS-REFERENCE TO RELATED APPLICATIONS

The disclosure claims priority to Chinese Patent Application No. 201910862204.9, entitled "BATTERY SEPARATOR, CELL, BATTERY MODULE, BATTERY PACK, AND VEHICLE" and filed by BYD Company Limited on September 12, 2019.

### FIELD

The disclosure relates to the field of battery technologies, and more specifically, to a battery separator, a cell, and a battery pack.

### BACKGROUND

To reduce the internal resistance of the battery, improve the battery capacity, and reduce the difficulty of automated battery production, currently, in the production process of cells available on the market, the method of forming electrode tabs has been changed from the conventional method of adhering a separate electrode tab to an electrode plate to the method of forming electrode tabs by die-cutting an electrode plate, i.e., the electrode tabs are formed by the remaining parts of the electrode plate after die-cutting.

However, the die-cutting adopted would lead to the formation of burrs at the edge of the electrode tabs. In the process of preparing a cell core or in the process of using the cell, the electrode tabs need to be bent at certain angles in order to be electrically connected to electrode terminals. During the bending, burrs on the electrode plate (especially the positive electrode plate) may pierce the separator and cause positive and negative electrodes to come into contact with each other, resulting in a short circuit, which seriously affects the safety of the battery.

In the prior art, in order to solve the above problems and prevent burrs from piercing the separator to cause a short circuit between the positive and negative electrodes, a ceramic coating of a certain thickness, e.g., boehmite or aluminum oxide, is generally coated on each side of the positive electrode plate. The ceramic coating is arranged between the positive electrode plate and the negative electrode plate and can prevent burrs from piercing the separator to a certain extent, thereby reducing the probability of occurrence of short circuit.

In the process of preparing a cell, boehmite or aluminum oxide needs to be coated on a positive electrode plate, and then the positive electrode plate is die-cut to form electrode tabs. On the one hand, for the coating of boehmite or aluminum oxide on the positive electrode plate, the coating thickness is difficult to control, the stability is poor and the process is difficult. In addition, because coating is performed before die-cutting, wavy edges cannot be formed during slitting of the positive electrode plate coated with boehmite or aluminum oxide, and the die-cutting parameter window is small, which has an adverse effect on die-cutting. Moreover, defects such as slag and burrs are easily formed on the edge during die-cutting. The slag and burrs may still pierce the separator 100 and cause positive and negative electrodes to be in contact with each other, resulting in a short circuit in the cell, and affecting the safety of the battery.

Although the coating of boehmite or aluminum oxide can reduce the risk of burrs piercing the separator to a certain extent, the ability to prevent piecing and short circuiting is limited, failing to meet the ever-increasing requirements on the safety performance of the battery.

### SUMMARY

The disclosure aims to at least solve one of the technical problems in the prior art. Accordingly, the disclosure provides a battery separator, which can effectively prevent burrs from piercing the separator and ensure high safety of the battery.

The battery separator includes a separator body and an insulating adhesive tape attached to the separator body. The separator body includes a first separator side and a second separator side arranged opposite to each other in a second direction, and the separator body includes a first separator end and a second separator end provided opposite to each other in a first direction. The insulating adhesive tape includes a first adhesive-tape side and a second adhesive-tape side arranged opposite to each other in the second direction, and the insulating adhesive tape includes a first adhesive-tape end and a second adhesive-tape end disposed opposite to each other in the first direction. The insulating adhesive tape is attached to the separator body in the first direction, and the first adhesive-tape side is arranged at a position corresponding to the first separator side. The insulating adhesive tape extends from the first separator end to the second separator end along the first direction.

As such, when the separator is combined with a positive electrode plate and a negative electrode plate to form a cell core, the insulating adhesive tape attached to the separator body can effectively prevent burrs formed by the die cutting of the electrode plate from piercing the separator, and reduce the risk of short circuit caused by the burrs piercing the separator inside the battery core. Furthermore, the insulating adhesive tape is attached to the separator body, and the insulating adhesive tape extends from the first separator end to the second separator end along the first direction. During the preparation process, there is no need to position and control the position of the insulating adhesive tape in the first direction, which reduces the preparation difficulty. Moreover, the combination of the separator body and the insulating adhesive tape may be formed in the process of forming the cell core by stacking or winding. As such, the configuration of the insulating adhesive tape is well combined with the preparation process of the cell core, which reduces the number of process steps. also, the die-cutting of the electrode plates may be separated from the configuration of the insulating adhesive tape, thereby ensuring the safety without affecting the die-cutting of the electrode plates.

A cell includes a positive electrode plate, a negative electrode plate, and a separator. The separator is at least partially disposed between the positive electrode plate and the negative electrode plate. The positive electrode plate includes a first positive-electrode-plate side and a second positive-electrode-plate side arranged opposite to each other in a second direction. A first separator side of the separator is arranged on a same side as the first positive-electrode-plate side. A positive electrode tab is arranged on the first positive-electrode-plate side, and a negative electrode tab is arranged on the negative electrode plate. The separator is a battery separator provided by the disclosure. The first positive-electrode-plate side is located between the first adhesive-tape side and the second adhesive-tape side along the second direction, and the second adhesive-tape side is located on the first positive-electrode-plate side and the second positive-electrode-plate side along the second direction.

A battery pack, including the cell provided by the disclosure.

Additional aspects and advantages of the disclosure will be partly given in and partly apparent from the description below, or understood through practice of the disclosure.

### BRIEF DESCRIPTION OF THE DRAWINGS

The above and/or other additional aspects and advantages of the disclosure become apparent and comprehensible from the description of embodiments in connection with accompanying drawings, in which:
FIG. 1 is a schematic structural diagram of a separator according to an embodiment of the disclosure;
FIG. 2 is a schematic structural diagram of a separator according to another embodiment of the disclosure;
FIG. 3 is a schematic cross-sectional view of a separator according to an embodiment of the disclosure;
FIG. 4 is a schematic structural diagram of an undie-cut positive electrode plate according to an embodiment of the disclosure;
FIG. 5 is a schematic structural diagram of a die-cut positive electrode plate according to an embodiment of the disclosure;
FIG. 6 is a schematic diagram showing the positional relationship between a separator and a positive electrode plate according to an embodiment of the disclosure;
FIG. 7 is a schematic structural diagram of a cell core formed by winding of electrode plates according to an embodiment of the disclosure;
FIG. 8 is a schematic structural diagram of a cell core formed by stacking of electrode plates according to an embodiment of the disclosure;
FIG. 9 is a schematic structural diagram of a cell according to an embodiment of the disclosure;
FIG. 10 is a schematic structural diagram of a battery module according to an embodiment of the disclosure;
FIG. 11 is a schematic structural diagram of a battery pack according to an embodiment of the disclosure;
FIG. 12 is a schematic structural diagram of a vehicle according to an embodiment of the disclosure; and
FIG. 13 is a schematic diagram of a vehicle according to an embodiment of the disclosure.

### DETAILED DESCRIPTION

Embodiments of the disclosure will be described in detail below with reference to the accompanying drawings in which the same or similar reference numerals throughout denote same or identical elements or elements having the same or similar functions. The embodiments described below with reference to the accompanying drawings are exemplary, and are intended to explain the disclosure, and not to be construed as limiting the disclosure.

In the description of the disclosure, it should be understood that the orientation or positional relationships indicated by the terms "center", "upper", "lower", "front", "rear", "left", "right", "vertical", "horizontal", "top", "bottom", "inner", "outer", etc. are based on the orientation or positional relationships shown in the drawings, and are only for the convenience of describing the disclosure and simplifying the description, rather than indicating or implying that the apparatus or element described must have a specific orientation or be constructed and operated in a specific orientation, and therefore are not to be construed as limiting the disclosure.

It should be noted that the terms "first" and "second" are used herein for purposes of description, and are not intended to indicate or imply relative importance or implicitly point out the number of the indicated technical feature. Therefore, the features defined by "first", and "second" may explicitly or implicitly include one or more features. Further, in the description of the disclosure, "multiple" and "a plurality of" mean two or more, unless otherwise particularly defined.

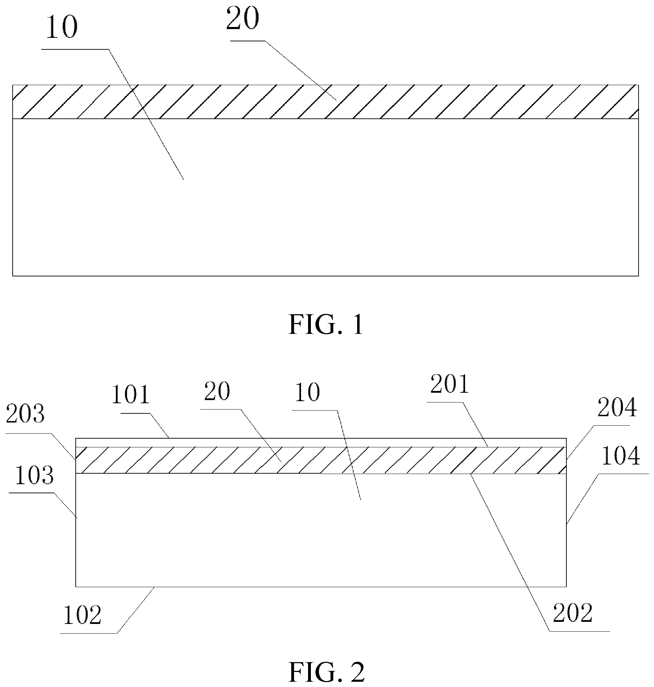

A battery separator, a cell, a battery module 82, a battery pack 91 and a vehicle 100 according to the embodiments of the disclosure will be described below with reference to FIG. 1 to FIG. 13.

A battery separator, as shown in FIG. 1 to FIG. 2, includes a separator body 10 and an insulating adhesive tape 20 attached to the separator body 10. In the disclosure, the separator body 10 is a separator commonly used in the prior art, and is mainly used for separating the positive electrode plate 30 and the negative electrode plate within the cell to prevent a short circuit caused by the contact of the two electrodes, and to allow ions in the electrolyte to pass through. For example, commonly used separators mainly include a polyethylene film (PE film), a polypropylene film (PP film), and a multi-layer separator composed of a PE film and a PP film. In addition, in order to improve the performance of the separator itself, the separator in the prior art further includes a separator prepared by adopting a phase inversion method with polyvinylidene fluoride (PVDF) as a bulk polymer. In the disclosure, the insulating adhesive tape 20 is attached to the separator body 10, and is mainly used for isolating the positive electrode plate 30 from the negative electrode plate, especially the die-cutting parts of the positive electrode plate 30 and the negative electrode plate. The insulating adhesive tape 20 is sandwiched between the die-cut part of the positive electrode plate 30 and the negative electrode plate to provide insulation and prevent burrs formed after die-cutting from piercing the separator, so as to provide a protection.

In the disclosure, directions of the separator body 10 including a first direction and a second direction are defined respectively.

For a continuous sheet-like separator body 10, the first direction is a length direction of the separator body 10, and the second direction is a width direction of the separator body 10. As shown in FIG. 1 or FIG. 2, the first direction is a left-right direction, and the second direction is an up-down direction.

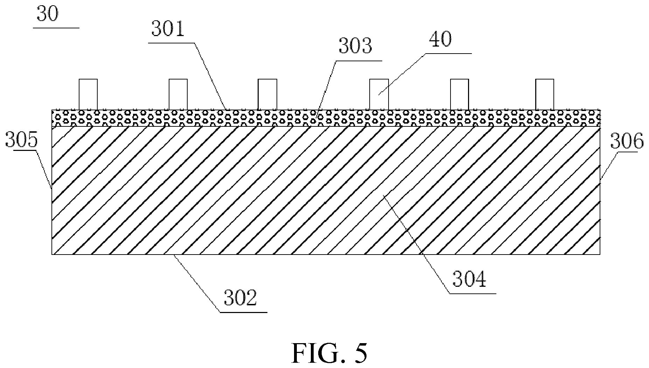

A direction in which electrode tabs (positive electrode tab 40 or negative electrode tab 60) extend out from an electrode plate (positive electrode plate 30 or negative electrode plate) is the second direction. As shown in FIG. 5, the up-down direction is the direction in which the positive electrode tab 40 extends out, i.e., the second direction, which is also a width direction of the positive electrode plate 30. The direction perpendicular to the up-down direction is the first direction (which is a direction perpendicular to the second direction on the plane where a large surface of the positive electrode plate 30 lies. As shown in FIG. 5, the direction in which the positive electrode tab extends out, i.e., the up-down direction, is the second direction, and the left-right direction perpendicular to the up-down direction is the first direction, i.e., the length direction of the positive electrode plate 30).

When the cell core is a wound core, the separator body 10 is a continuous sheet. In this case, the first direction is a winding direction of the separator body 10. As shown in FIG. 1 or FIG. 2, the left-right direction of a sheet-like separator body 10 is the first direction, i.e., the winding direction of the battery separator; and the second direction is the width direction of the separator body 10, i.e., the up-down direction in FIG. 1 or FIG. 2.

From the perspective of view of a cell 70, a cell length direction, a cell width direction, and a cell thickness direction of the cell 70 are defined. A direction in which an electrode terminal extends out is regarded as the cell length direction, a direction perpendicular to the cell length direction on a large surface of the cell 70 is defined as the cell width direction, and a third direction in a three-dimensional space is the cell thickness direction. In this case, when a direction in which an electrode tab extends out is the same as the direction in which the electrode terminal extends out, the first direction is the cell width direction, and the second direction is the cell length direction.

The definition of the above directions will be discussed in detail with reference to the accompanying drawings.

The separator body 10 includes a first separator side 101 and a second separator side 102 arranged opposite to each other in the second direction. As shown in FIG. 2, FIG. 3 and FIG. 6, the first separator side 101 is a side of the separator body 10 close to a position where an electrode tab extends out (in the disclosure, the insulating adhesive tape 20 is provided mainly to solve the problem that burrs formed by die-cutting of the positive electrode plate 30 pierce the separator; the negative electrode plate is generally designed to be wider than the positive electrode plate 30, the die-cutting position is higher, and even if burrs on the negative electrode plate pierce the separator, the positive and negative electrodes are not short circuited, so the safety performance would not be affected. Therefore, the first separator side 101 is a side of the separator body 10 close to the position where the positive electrode tab 40 extends out). The second separator side 102 is a side of the separator body 10 away from the position where the electrode tab extends out. In addition, the separator body 10 includes a first separator end 103 and a second separator end 104 arranged opposite to each other in the first direction. For example, in a wound cell core, if an innermost end of the separator body 10 is defined as the first separator end 103, an outermost end of the separator body 10 is defined as the second separator end 104, and vice versa (where the innermost end and the outermost end are defined based on inner and outer loops of the winding. For example, in the process of forming the battery cell by winding from the inside to the outside, the starting position is the innermost loop, which is the innermost end of the separator body 10, i.e., the first separator end 103; after the winding is completed, the end position is the outermost loop, which is the outermost end of the separator body 10, i.e., the second separator end 104).

For a laminated cell, it is formed by stacking of a number of positive electrode plates, a number of negative electrode plates, and a number of battery separators. In this case, a direction in which the electrode tab extends out is the second direction, and the separator body 10 includes a first separator side 101 and a second separator side 102 in the second direction. Wherein the first separator side 101 is a side close to the position where the electrode tab extends out. A direction perpendicular to the direction in which the electrode tab extends out on a large surface of the separator body 10 is the first direction. The separator body 10 includes a first separator end 103 and a second separator end 104 in the first direction (where the cell width direction is the first direction, and two ends in the cell width direction are the first separator end 103 and the second separator end 104). As shown in FIG. 1 or FIG. 2, a surface of the separator body 10 shown in this view is a large surface of the separator body 10.

As shown in FIG. 2, the left-right direction is the first direction, and the up-down direction is the second direction. The first separator side 101 is at an upper side of the separator body 10, and the second separator side 102 is at a lower side of the separator body 10. A left end of the separator body 10 is the first separator end 103, and a right end of the separator body 10 is the second separator end 104. In addition, the first adhesive-tape side 201 is at an upper side of the insulating adhesive tape 20, and the second adhesive-tape side 202 is at a lower side of the insulating adhesive tape 20. A left end of the insulating adhesive tape 20 is the first adhesive-tape end 203, and a right end of the insulating adhesive tape 20 is the second adhesive-tape end 204.

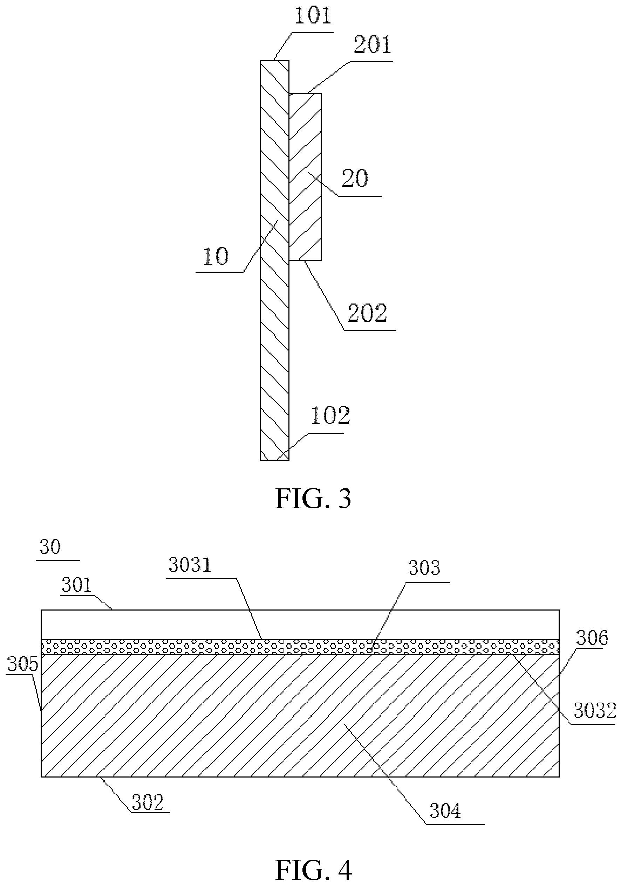

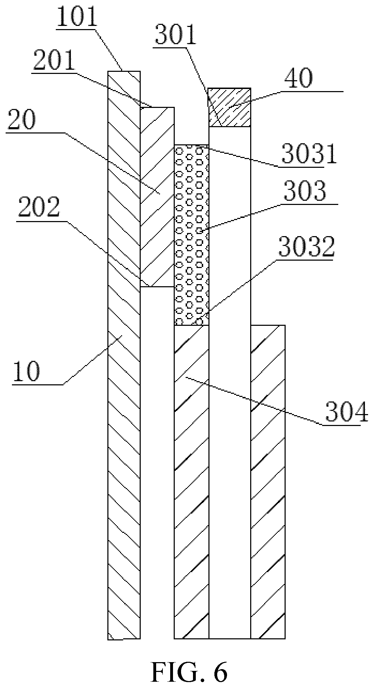

It should be noted that the size or scale of each figure in all the accompanying drawings of the disclosure does not constitute a limitation on the technical solutions provided by the disclosure. As shown in FIG. 2, a proportional relationship between a length between the first adhesive-tape end 203 and the second adhesive-tape end 204 and the separator body 10 does not represent an actual proportional relationship. All the accompanying drawings of the disclosure merely show the positional relationship between the components, and do not represent the specific size or proportional relationship. As shown in FIG. 3 or FIG. 6, the first separator side 101 is further up than the first adhesive-tape side 201, which can be shown and expressed in the figure. The length by which the first separator side 101 is further up than the first adhesive-tape side 201 in the upward direction and the proportional relationship between them cannot be shown or expressed in FIG. 3 or FIG. 6. As shown in FIG. 6, the first adhesive-tape side 201 is arranged between the first separator side 101 and the second separator side (not shown in FIG. 6, which is a lowermost side of the separator body in the up-down direction). The first coating side 3031 is located between the first adhesive-tape side 201 and the second adhesive-tape side 202, and the second adhesive-tape side 202 is located between the first coating side 3031 and the second coating side 3032. Such positional relationships can be expressed in the accompanying drawings of the disclosure, but the specific size or proportional relationship is not limited in the accompanying drawings of the disclosure.

The first separator side 101 and the second separator side 102 of the separator body 10 are arranged opposite to each other in the second direction, and the first separator side 101 and the second separator side 102 both extend in the first direction. As shown in FIG. 2, the first separator side 101 and the second separator side 102 are arranged opposite to each other in the up-down direction, and the first separator side 101 and the second separator side 102 both extend in the left-right direction. The first separator end 103 and the second separator end 104 of the separator body 10 are arranged opposite to each other in the first direction, and the first separator end 103 and the second separator end 104 both extend in the second direction. As shown in FIG. 2, the first separator end 103 and the second separator end 104 are arranged opposite to each other in the left-right direction, and the first separator end 103 and the second separator end 104 both extend in the up-down direction.

The separator body 10 is a rectangular sheet, and the first separator side 101, the second separator side 102, the first separator end 103, and the second separator end 104 are four sides of the rectangular sheet-like separator body 10, as shown in FIG. 2.

In the battery separator of the disclosure, after the battery core is formed, the positive electrode tab 40 extends out from the first separator side 101, and an electrode terminal of a cell 70 also extends out in the second direction and is provided at a cover plate in the second direction.

In some embodiments of the disclosure, the positive electrode tab 40 and the negative electrode tab 60 may extend out toward a same side, or may extend out toward two sides respectively, i.e., the positive electrode tab 40 and the negative electrode tab 60 may both be located on the first separator side 101, or the positive electrode tab 40 is located on the first separator side 101 and the negative electrode tab 60 is located on the second separator side 102. The positive electrode tab 40, the first separator side 101, and the first adhesive-tape side 201 are located on a same side, as shown in FIG. 6, as such, the insulating adhesive tape 20 can effectively prevent burrs formed at the die-cut edge of the positive electrode tab 40 from piercing the battery separator to cause a short circuit of the positive and negative electrodes and affect the safety of the battery. Correspondingly, when positive and negative electrode terminals extend out toward the same side, the electrode terminals are provided at a cover plate at one end corresponding to the first separator side 101. When the positive and negative electrode terminals extend out toward two sides respectively, the end corresponding to the first separator side 101 and the end corresponding to the second separator side 102 are each provided with a cover plate, the positive electrode terminal extends out from the cover plate corresponding to the first separator side 101, and the negative electrode terminal extends out from the cover plate corresponding to the second separator side 102.

The insulating adhesive tape 20 is arranged cooperating with the separator body 10 and also includes a first adhesive-tape side 201 and a second adhesive-tape side 202 as well as a first adhesive-tape end 203 and a second adhesive-tape end 204. The first adhesive-tape side 201 and the second adhesive-tape side 202 are arranged opposite to each other in the second direction, and the first adhesive-tape end 203 and the second adhesive-tape end 204 are arranged opposite to each other in the first direction. As shown in FIG. 2, the second direction is an up-down direction in the figure, and the first direction is a left-right direction in the figure. The insulating adhesive tape 20 is attached to the separator body 10 in the first direction, and the first adhesive-tape side 201 is disposed at a position corresponding to the first separator side 101. i.e., the first adhesive-tape side 201 and the first separator side 101 are disposed on a same side.

Similar to the shape of the separator body 10, in some embodiments, the insulating adhesive tape 20 is also a rectangular sheet, and the first adhesive-tape side 201, the second adhesive-tape side 202, the first adhesive-tape end 203, and the second adhesive-tape end 204 are four sides of the rectangular sheet. As shown in FIG. 2. the first adhesive-tape side 201 is consistent with the first separator side 101 and extends in the first direction. The second adhesive-tape side 202 is consistent with the second separator side 102 and also extends in the first direction. The first adhesive-tape end 203 is consistent with the first separator end 103 and extends in the second direction. The second adhesive-tape side 202 is consistent with the second separator side 102 and also extends in the second direction.

The insulating adhesive tape 20 extends from the first separator end 103 to the second separator end 104 in the first direction (consistent with the separator body 10 and may be a length direction of the insulating adhesive tape 20). During the manufacturing process, the insulating adhesive tape 20 may be directly attached to the first separator side 101 of the separator body 10 and extend from the first separator end 103 to the second separator end 104.

On the one hand, in the solution of forming an electrode tab by die-cutting, it is necessary to cut off all the excess foil along the length direction of the positive electrode plate 30 (the first direction). As such, after die-cutting, burrs not only may be formed at the edge of the positive electrode tab 40, but also may be formed on the entire first positive-electrode-plate side 301 in the first direction. The conventional solution of partially pasting an adhesive tape on the positive electrode tab 40 cannot prevent burrs at other positions on the first positive-electrode-plate side 301 from piercing the separator body 10, and there is also a risk of short circuit and potential safety hazards. In the disclosure, the insulating adhesive tape 20 extends from the first separator end 103 to the second separator end 104 in the first direction. When the insulating adhesive tape 20 is combined with the positive electrode plate 30, the insulating adhesive tape 20 can completely cover the first positive-electrode-tab 40 side and the die-cut edge of the positive electrode tab 40. As such, burrs at all positions on the first positive-electrode-plate side 301 can be prevented from piercing the separator body 10, thereby reducing or even eliminating the risk of short circuit, and improving the safety.

On the other hand, there is no need to align the position of the insulating adhesive tape 20 with the positions of the positive electrode tab 40 one by one, which reduces the difficulty of positioning in the production process, reduces the number of process steps, and also can avoid inaccurate positioning, reduce the defect rate, and reduce the risk of failure in providing the protection effect in the final products due to inaccurate positioning.

Based on the above, when the battery separator provided by the disclosure is combined with a positive electrode plate 30 and a negative electrode plate to form a cell core, the insulating adhesive tape 20 attached to the separator body 10 can effectively prevent burrs formed by the die cutting of the electrode plate from piercing the separator, and reduce the risk of short circuit caused by the burrs piercing the separator inside the battery core. Furthermore, the insulating adhesive tape 20 is attached to the separator body 10, and the insulating adhesive tape 20 extends from the first separator end 103 to the second separator end 104 in the first direction. During the manufacturing process, there is no need to position and control the position of the insulating adhesive tape 20 in the first direction, which reduces the preparation difficulty. Moreover, the combination of the separator body 10 and the insulating adhesive tape 20 may be formed in the process of forming the battery core by stacking or winding. As such, the configuration of the insulating adhesive tape 20 is well combined with the preparation process of the battery core, which reduces the number of process steps. Also, the die-cutting of the electrode plates may be separated from the configuration of the insulating adhesive tape 20, thereby ensuring the safety without affecting the die-cutting of the electrode plates.

In the prior art, in addition to the solution of partially pasting an adhesive tape on the electrode tabs, another solution is to coat each of two sides of the positive electrode plate 30 with a ceramic coating 303 of a certain thickness to achieve the effect of preventing burrs from piecing the separator. However, in the manufacturing process, a ceramic coating 303 needs to be firstly coated on each of the two sides of the positive electrode plate 30. Then the positive electrode plate 30 coated with the ceramic coatings 303 needs to be die-cut to obtain a positive electrode plate 30 having the positive electrode tab 40 formed by the die-cutting. The positive electrode plate 30 is then combined with the separator and the negative electrode plate, and wound or stacked to form a cell. In this process, on the one hand, the process requirements are high, and on the other hand, in the die-cutting process, the die-cutting parameter window is small, which is not conducive to die-cutting. Besides, some slag or burrs may still be formed at the edge after die-cutting, and cannot be covered, which still leads to the risk of short circuit and affects the safety. In addition, in the process of coating the ceramic coating 303, the thickness of the ceramic coating 303 needs to be strictly controlled, and the control needs to be monitored in real time and completed during the coating process. Moreover, the positive electrode plate 30 coating with the ceramic coatings 303 leads to an increase in the die-cutting difficulty and a change in the requirements for the die-cutting process, posing high requirements on the overall process and control. In the disclosure, the preparation of the insulating adhesive tape is simpler than the coating of the ceramic coating 303, and allows easier thickness control. In addition, the configuration of the insulating adhesive tape may be performed after the die-cutting of the positive electrode plate 30 is completed, which, on the one hand, does not affect the die-cutting process of the positive electrode plate 30, and on the other hand, can effectively cover the positions where burrs are formed by the die-cutting, thereby reducing the risk of short circuit and improving the safety.

In some embodiments of the disclosure, as shown in FIG. 1, the first adhesive-tape side 201 is flush with the first separator side 101, and this structure shows an ideal optimal position for the insulating adhesive tape 20 to cooperate with the separator. As such, every part of the separator can be completely protected, to prevent the entire separator from being pierced.

In practice, considering the deviation correction of the winding machine and the fluctuation in the width slitting process of the insulating adhesive tape 20 and the separator in the processing and preparation process, in some other embodiments, as shown in FIG. 2 and FIG. 3, the first adhesive-tape side 201 is spaced apart from the first separator side 101 by a distance, where the distance is less than or equal to 1 mm.

In some embodiments of the disclosure, as shown in FIG. 2, the insulating adhesive tape 20 not only extends from the first separator end 103 to the second separator end 104 in the first direction, but also the first adhesive-tape end 203 is flush with the first separator end 103, and the second adhesive-tape end 204 is flush with the second separator end 104. After the separator body 10 and the insulating adhesive tape 20 are pasted together, the insulating adhesive tape 20 at least partially covers the separator body 10 in the first direction, to entirely prevent the separator body 10 from being pierced.

The width of the positive electrode plate 30 directly affects the width of the positive electrode dressing layer 304, which in turn affects the capacity of the battery. To be specific, the larger the width and the size of the positive electrode plate 30, the higher the overall capacity of the battery. In contrast, in the case of a fixed volume, how to effectively utilize the space in the limited volume to obtain a larger capacity is a problem that needs to be overcome in the current battery industry. Therefore, theoretically, the width of the positive electrode dressing layer 304 on the positive electrode plate 30 is preferably as large as possible. In the disclosure, the insulating adhesive tape 20 is attached to the separator body 10. When used in a battery, the insulating adhesive tape 20 is arranged between the separator body 10 and the positive electrode plate 30 to prevent burrs formed after die-cutting of the positive electrode plate 30 from piercing the separator body 10 to cause the positive electrode plate 30 and the negative electrode plate to be in short circuit contact with each other. An excessively large width of the insulating adhesive tape 20 affects the width of the positive electrode dressing layer 304 and therefore affects the capacity of the battery. In addition, the insulating adhesive tape 20 should not cover the positive electrode dressing layer 304, or otherwise the battery performance will be affected and the lithium precipitation of the positive electrode dressing layer 304 will be inhibited. To sum up, in the disclosure, the width of the insulating adhesive tape 20 cannot be too large, or otherwise it will cover the positive electrode dressing layer 304 or affect the capacity of the battery; and also cannot be too small, or otherwise the technical problem to be solved by the disclosure cannot be well solved, and the effect of preventing piecing cannot be achieved. Therefore, in some embodiments of the disclosure, a width of the insulating adhesive tape 20 in the second direction is 4 mm to 6 mm.

In order to ensure the bonding reliability between the insulating adhesive tape 20 and the separator body 10, especially in the battery manufacturing process where a particularly high bonding reliability is required, for example, in the process of forming a wound battery, the battery separator (the combination of the insulating adhesive tape 20 and the separator body 10) needs to be stretched and then wound. If the adhesiveness between the insulating adhesive tape 20 and the separator body 10 is insufficient, the insulating adhesive tape 20 may be separated from the separator body 10 during the stretching process, which, on the one hand, affects the smooth progress of the production process, and on the other hand, leads to dislocation of the insulating adhesive tape 20 and the separator body 10 after being separated and reduces the yield of the final products. Therefore, in the disclosure, a peel strength between the insulating adhesive tape 20 and the separator body 10 is greater than or equal to 0.11 kgf/cm. The adhesiveness between the insulating adhesive tape 20 and the separator body 10 is improved to provide a good adhesion between them, so that warpage and deformation will not occur during the manufacturing process of the cell core, and they will not fall off in the battery.

After the insulating adhesive tape 20 is attached to the separator body 10, the puncture strength of the entire battery separator can be improved. In some embodiments, a puncture strength of the battery separator at a position of the insulating adhesive tape 20 is 2-3 times that of the separator body 10.

In some embodiments, in order to reduce the overall thickness of the battery and improve the energy density, the insulating adhesive tape 20 is arranged on one surface of the separator body 10 in a thickness direction of the separator body 10, which may be a surface of the separator body 10 facing the negative electrode plate or a surface of the separator body 10 facing the positive electrode plate 30. As shown in FIG. 6, the insulating adhesive tape 20 is arranged on the side of the separator body 10 facing the positive electrode plate 30, so that the burrs formed by the die-cutting of the positive electrode plate 30 first pierce the insulating adhesive tape 20 and then the separator body 10, which can reduce the damage to the separator body 10 caused by the burrs.

In some other embodiments, in order to improve the overall strength of the cell separator, an insulating adhesive tape 20 is arranged on each of two surfaces of the separator body 10 in the thickness direction, thereby further improving the safety.

In the battery separator of the disclosure, the first separator side 101 and the second separator side 102 both extend in the first direction, and the first separator end 103 and the second separator end 104 both extend in the second direction; and the first separator side 101, the second separator side 102, the first separator end 103, and the second separator end 104 constitute four sides of the separator body 10.

Correspondingly, the first adhesive-tape side 201 and the second adhesive-tape side 202 both extend in the first direction, and the first adhesive-tape end 203 and the second adhesive-tape end 204 both extend in the second direction.

The second adhesive-tape side 202 is arranged close to the second separator side 102. Herein, "close to" indicates that the second adhesive-tape side 202 is closer to the second separator side 102 than the first adhesive-tape side 201.

In addition, the first adhesive-tape end 203 is disposed corresponding to the first separator end 103, and the second adhesive-tape end 204 is arranged at a position corresponding to the second separator end 104.

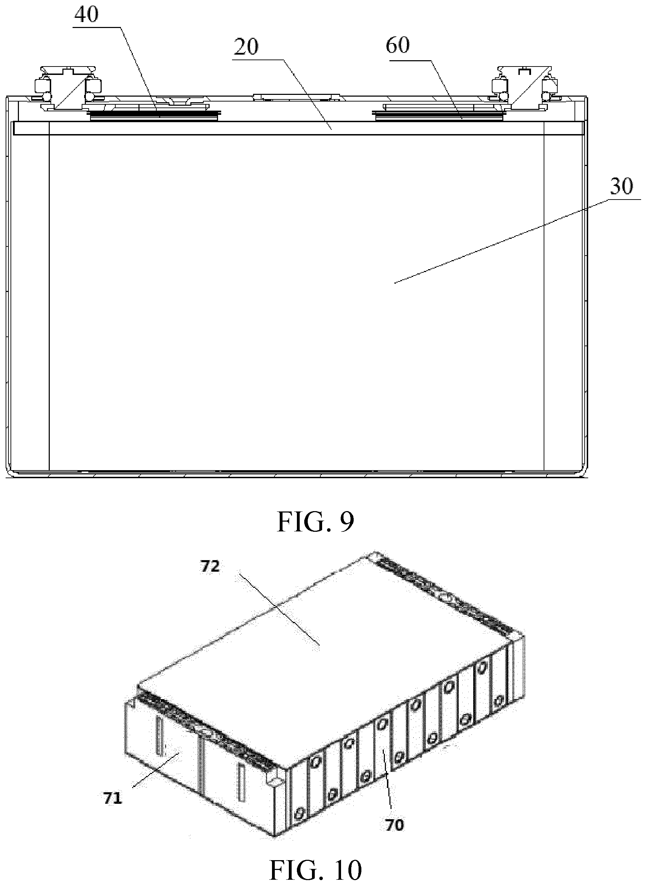

The disclosure provides a cell, which includes a positive electrode plate 30, a negative electrode plate, and a separator. The separator is at least partially arranged between the positive electrode plate 30 and the negative electrode plate. As shown in FIG. 4 and FIG. 5, the positive electrode plate 30 includes a first positive-electrode-plate side 301 and a second positive-electrode-plate side 302 arranged opposite to each other in a second direction. The separator includes a first separator side 101 and a second separator side 102 arranged opposite to each other in the first direction. The first separator side 101 is arranged on a same side as the first positive-electrode-plate side 301. A positive electrode tab 40 is arranged on the first positive-electrode-plate side 301, and a negative electrode tab 60 is arranged on the negative electrode plate. As shown in FIG. 9.

In some embodiments of the disclosure, the battery separator provided by the disclosure may be prepared separately or purchased, and then the battery separator is applied to the battery provided by the disclosure. The battery separator provided by the disclosure is used as a separator 100 in the cell provided by the disclosure. The battery separator, together with a positive electrode plate 30 and a negative electrode plate 50, constitutes a battery core of the battery provided by the disclosure. In this embodiment, the battery separator provided by the disclosure is used as a complete component of the battery provided by the disclosure to form a cell.

In some other embodiments of the disclosure, the process of preparing the battery separator provided by the disclosure and the process of preparing the battery provided by the disclosure are integrated together; and in the process of preparing the battery provided by the disclosure, the preparation of the battery separator provided by the disclosure is completed at the same time. The separator 100, the positive electrode plate 30, the negative electrode plate 50, and the insulating adhesive tape 20 may be used together to prepare the battery provided by the disclosure, instead of preparing the battery separator provided by the disclosure first and then using the battery separator in the preparation of the battery provided by the disclosure.

In a word, in the disclosure, the battery separator provided by the disclosure is not to be construed as an absolutely independent existence in a narrow sense, and the battery separator may be prepared in advance or may be formed during the battery preparation process. In the explanation of the solutions, first preparing or purchasing the battery separator provided by the disclosure and then applying it to the process of preparing the battery provided by the disclosure is merely an implementation of the disclosure and is not intended to be limiting. In the other explanation, although the battery separator provided by the disclosure is not prepared first, the battery separator provided by the disclosure is also formed in the process of preparing the battery provided by the disclosure, which is also one of the implementations of the disclosure and therefore shall fall within the scope of the disclosure. The protection scope of the battery provided by the disclosure is a structure including the battery separator provided by the disclosure in the battery, and is not limited to the method of first preparing the battery separator provided by the disclosure and then applying it to the process of preparing the battery provided by the disclosure.

In some embodiments, the positive electrode plate 30 includes a positive electrode current collector and a positive electrode dressing layer 304 disposed on the positive electrode current collector, and the negative electrode plate includes a negative electrode current collector and a negative electrode dressing layer disposed on the negative electrode current collector; and the positive electrode plate 30 and the negative electrode plate are separated by the separator.

The positive electrode tab 40 is disposed on the first positive-electrode-plate side 301, a position of the positive electrode tab 40 corresponds to that of the first separator side 101, and the first separator side 101 is disposed on a same side as the first positive-electrode-plate side 301. The negative electrode tab 60 is disposed on the negative electrode plate, a position of the negative electrode tab 60 corresponds to that of the positive electrode plate 30, and the negative electrode plate also includes a first negative-electrode-plate side and a second negative-electrode-plate side disposed opposite to each other in the second direction. The negative electrode tab 60 may be disposed on the first negative-electrode-plate side, or may be disposed on the second negative-electrode-plate side. That is, the positive electrode tab 40 and the negative electrode tab 60 may be located at a same end or different ends on the battery. Correspondingly, a positive terminal and a negative terminal for outputting a current may also be located at a same end or different ends.

In the battery provided by the disclosure, the separator 100 is the battery separator provided by the disclosure. The first positive-electrode-plate side 301 is located between the first adhesive-tape side 201 and the second adhesive-tape side 202 in the second direction, and the second adhesive-tape side 202 is located between the first positive-electrode-plate side 301 and the second positive-electrode-plate side 302 in the second direction.

As shown in FIG. 2 and FIG. 5, in the up-down direction (second direction), an upper side of the separator body 10 is the first separator side 101, an upper side of the insulating adhesive tape 20 is the first adhesive-tape side 201, and an upper side of the positive electrode plate 30 is the first positive-electrode-plate side 301; correspondingly, a lower side of the separator body 10 is the second separator side 102, a lower side of the insulating adhesive tape 20 is the second adhesive-tape side 202, and a lower side of the positive electrode plate 30 is the second positive-electrode-plate side 302. The first positive-electrode-plate side 301 is higher than the second adhesive-tape side 202, the first positive-electrode-plate side 301 is lower than the first adhesive-tape side 201, the second adhesive-tape side 202 is higher than the second positive-electrode-plate side 302, and the second adhesive-tape side 202 is lower than the first positive-electrode-plate side 301.

In the battery provided by the disclosure, the first positive-electrode-plate side 301 is a die-cut side, that is, after a wide positive electrode plate 30 is die-cut, the positive electrode tab 40 and the first positive-electrode-plate side 301 are formed. After die-cutting, burrs may be formed at the edges of the first positive-electrode-plate side 301 and the positive electrode tab 40 due to the die-cutting. If the first positive-electrode-plate side 301 and the positive electrode tab 40 are directly combined with the separator and the negative electrode plate to form a battery core, the burrs may pierce the separator, resulting in a short circuit between the positive electrode plate 30 and the negative electrode plate. Therefore, in the disclosure, the insulating adhesive tape 20 covers the first positive-electrode-plate side 301 and the positive electrode tab 40 and isolates the first positive-electrode-plate side 301 and the positive electrode tab 40 from the negative electrode plate, thereby preventing burrs from piercing the separator and improving the battery safety.

In order to prevent the separator from being deformed or shrinking due to other factors to cause a short circuit between the positive electrode plate 30 and the negative electrode plate, the separator is generally designed to be wider than the positive electrode plate 30. The first separator side 101 at least needs to be disposed beyond the first positive-electrode-plate side 301. As shown in FIG. 6, the first separator side 101 is higher than the first positive-electrode-plate side 301. In the up-down direction, the first separator side 101 is disposed higher than the first positive-electrode-plate side 301.

To ensure the overall performance of the battery, a distance between the first separator side 101 and the first positive-electrode-plate side 301 may be 1 mm to 2 mm. A die-cut positive electrode edge is located on the insulating adhesive tape, and a puncture strength of the insulating adhesive tape is 2 to 3 times that of the separator, which can reduce the risk of burrs piercing the separator, and at the same time prevent the adhesive tape from contacting the dressing to affect the battery capacity.

In some embodiments of the disclosure, a distance between the first adhesive-tape side 201 and the first positive-electrode-plate side 301 is 1 mm to 2 mm. A die-cut positive electrode edge is located on the insulating adhesive tape, and a puncture strength of the insulating adhesive tape is 2 to 3 times that of the separator, which can reduce the risk of burrs piercing the separator, and at the same time prevent the adhesive tape from contacting the dressing to affect the battery capacity.

In some embodiments of the disclosure, a thickness of the insulating adhesive tape is 20 µm to 30 µm, which ensures the hardness of the adhesive tape, avoids the wrinkles of the adhesive tape when pasting, and improves the processing ability.

In some embodiments of the disclosure, as shown in FIG. 5 and FIG. 6, a position on the positive electrode plate 30 close to the first positive-electrode-plate side 301 is coated with a ceramic coating 303, the ceramic coating 303 includes a first coating side 3031 and a second coating side 3032, the first coating side 3031 is located between the first adhesive-tape side 201 and the second adhesive-tape side 202, and the second adhesive-tape side 202 is located between the first coating side 3031 and the second coating side 3032. After the ceramic coating is die-cut, burrs of 80 µm to 120 µm may be formed, which are very sharp. The insulating adhesive tape is attached to at least one surface of the separator body, which can effectively reduce the safety risk of damage to the separator caused by the burrs.

In some implementations, a spacing between the second coating side 3032 and the second adhesive-tape side 202 is 1 mm to 2 mm, and the die-cut positive electrode edge is in contact with the adhesive tape, which can reduce the risk of burrs piercing the separator to cause a short circuit, while preventing the adhesive tape from contacting the dressing to affect the battery capacity.

In some embodiments, the positive electrode plate 30 is coated with a positive electrode dressing layer 304, and a distance between a side of the positive electrode dressing layer 304 close to the first positive-electrode-plate side 301 and the second adhesive-tape side 202 is 0 mm to 1 mm, thereby preventing the adhesive tape from contacting the dressing layer 30 to affect the battery capacity.

In the disclosure, the positive electrode tab 40 is obtained by die-cutting the positive electrode plate 30. In addition, in the preparation process, a positive electrode plate 30 of a larger width is selected, which is die-cut to form the positive electrode tab 40, and the side where the positive electrode tab 40 is formed is the first positive-electrode-plate side 301.

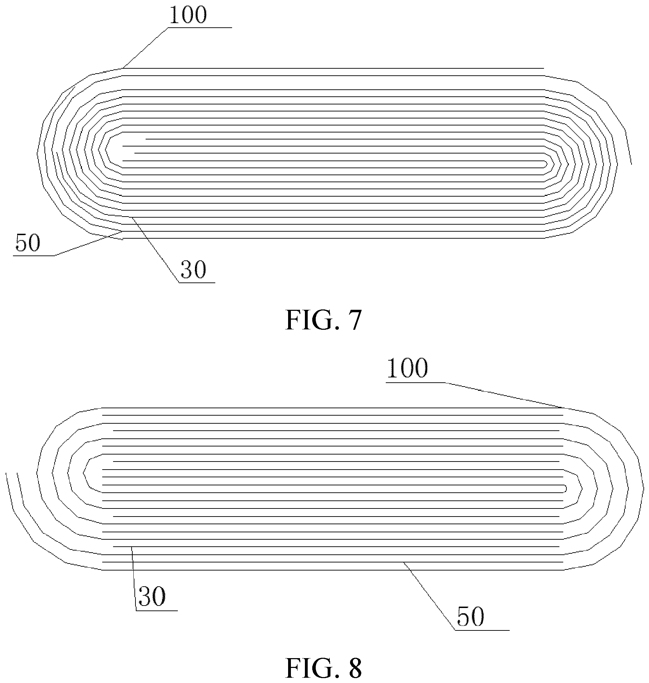

In some embodiments of the disclosure, as shown in FIG. 7, the positive electrode plate 30, the negative electrode plate, and the separator are each an integral and continuous sheet, and a core of the cell is formed by stacking the positive electrode plate 30, the negative electrode plate 50, and the separator 100 and winding the stack.

A wound cell core is formed by stacking the positive electrode plate 30, the negative electrode plate, and the separator and winding the stack. In the preparation process, the positive electrode plate 30, the negative electrode plate, and the separator are first stretched, unwound and corrected for deviation, and then the positive electrode plate 30, the negative electrode plate, and the separator are pressed together and wound to form a battery core. In conventional solutions, the above operation steps are performed first; and finally, an adhesive tape is attached to the positive electrode tab 40 to complete the isolation, or a ceramic coating 303 is directly coated at the edge of the positive electrode plate 30. As mentioned above, both the two methods have their drawbacks. Therefore, in the disclosure, before stretching and unwinding, the insulating adhesive tape 20 and the separator body 10 are first pasted together to form a to-be-unwound separator, which is then stretched and unwound; or, during the stretching and unwinding process, an independent stretching and unwinding structure for the insulating adhesive tape 20 is placed, and the positive electrode plate 30, the negative electrode plate, the separator body 10, and the insulating adhesive tape 20 are stretched and unwound respectively, and then wound to form a cell core. During this process, the insulating adhesive tape 20 is pressed and attached to the separator body 10.

In the wound battery core, the positive electrode plate 30, the negative electrode plate 50, and the separator 100 are each an integral and continuous sheet; therefore, the separator body 10 and the insulating adhesive tape 20 that constitute the separator are each an integral and continuous sheet. As such, during the unwinding and winding process, the separator body 10 and the insulating adhesive tape 20 are stretched and unwound, and then wound into a battery core. In this embodiment, the design of the continuous separator body 10 and insulating adhesive tape 20 can save the step of pasting an adhesive tape to the positive electrode tabs 40 one by one after being wound into a cell core, thereby reducing the number of process steps and reducing the difficulty and cost of processing.

In some other embodiments, as shown in FIG. 8, the separator is an integral and continuous sheet, i.e., the separator body 10 and the insulating adhesive tape 20 are each an integral and continuous sheet; there are a plurality of positive electrode plates 30 and a plurality of negative electrode plates, a core of the cell is formed by folding the separator multiple times and inserting one positive electrode plate 30 or one negative electrode plate between every two neighboring layers of the separator, and the positive electrode plates 30 and the negative electrode plates are alternately disposed.

In some other embodiments, the separator is an integral and continuous sheet, there are a plurality of positive electrode plates 30 and a plurality of negative electrode plates, a core of the cell is formed by winding the separator and inserting one positive electrode plate 30 or one negative electrode plate between every two neighboring layers of the separator, and the positive electrode plates 30 and the negative electrode plates are alternately disposed.

In the above two embodiments, the separator is an integral and continuous sheet; therefore, the separator body 10 and the insulating adhesive tape 20 are also each an integral and continuous sheet. As such, the insulating adhesive tape 20 can be directly attached to the separator body 10, without the need to paste the adhesive tape on the positive electrode tabs 40 in the formed battery core one by one, thereby reducing the number of process steps and reducing the difficulty and cost of processing.

The above three embodiments are respectively a wound battery core and a laminated battery core. The laminated battery core is not a fully-laminated battery core, but instead, there are a plurality of positive electrode plates 30 and a plurality of negative electrode plates, the separator is an integral and continuous sheet, the separator is continuously folded or wound, so that each of the plurality of positive electrode plates 30 or negative electrode plates is sandwiched between two neighboring layers of the separator to form a battery core, so as to make up a battery.

Certainly, in some embodiments, a fully-laminated battery core can also use the separator provided by the disclosure, and the number of process steps and cost can also be reduced to a certain extent. In addition, the safety can be stably ensured and the separator can be protected from being pierced by burrs.

FIG. 4 shows an undie-cut positive electrode plate. FIG. 5 shows a die-cut positive electrode plate having a positive electrode tab 40.

The disclosure also provides a battery module, including a plurality of batteries provided by the disclosure, where the plurality of batteries are connected in series and/or in parallel. In some embodiments, as shown in FIG. 10, the battery module includes a plurality of cells 70, where the plurality of cells 70 are arranged between two end plates 71, and an upper side of the battery module is covered and fixed by a top cover 72.

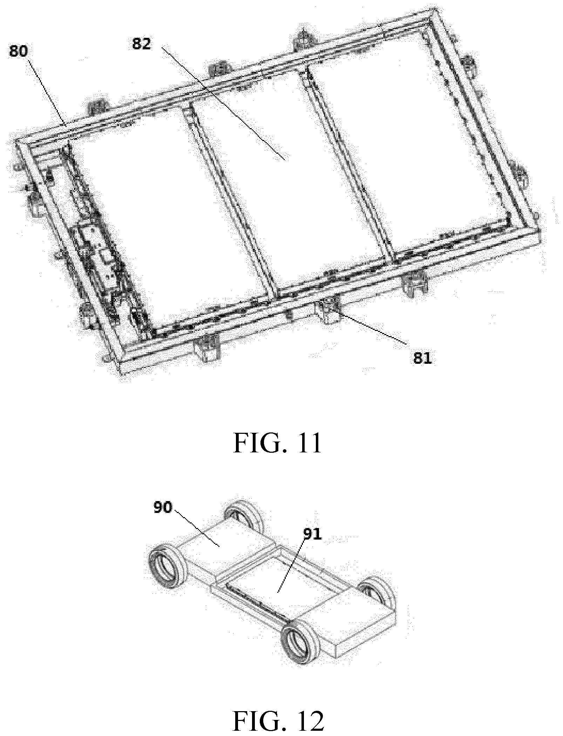

The disclosure also provides a battery pack, including the above-mentioned battery or at least one battery module provided by the disclosure. In some embodiments, as shown in FIG. 11, the battery pack includes a tray 80 and a plurality of battery modules 82 disposed on the tray 80. In order to facilitate the fixing, lifting lugs 81 configured to facilitate the installation of the tray on a vehicle body are disposed around the tray 80.

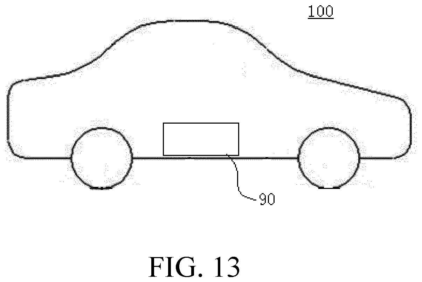

As shown in FIG. 13, In some embodiments of the disclosure, a vehicle 100 is provided, including a plurality of batteries provided by the disclosure or a battery module provided by the disclosure or a battery pack provided by the disclosure. In some embodiments, as shown in FIG. 12, the vehicle 100 includes a chassis 90 and a battery pack 91 disposed on the chassis.

Based on the above, it can be seen that the disclosure has the above-mentioned excellent characteristics, and therefore can be used to offer enhanced performance that is unprecedented in the prior art, to achieve high practicability and become a product with great practical value.

Although the embodiments of the disclosure have been illustrated and described above, it is to be understood by those of ordinary skill in the art that various changes, alterations, replacements and modifications can be made to these embodiments without departing from the principle and spirit of the disclosure. The scope of the disclosure is defined by the appended claims and equivalents thereof.

## Claims

1. A battery separator, comprising a separator body and an insulating adhesive tape attached to the separator body; wherein the separator body comprises a first separator side and a second separator side provided opposite to each other in a second direction, and the separator body comprises a first separator end and a second separator end provided opposite to each other in a first direction; the insulating adhesive tape comprises a first adhesive-tape side and a second adhesive-tape side provided opposite to each other in the second direction, and the insulating adhesive tape comprises a first adhesive-tape end and a second adhesive-tape end provided opposite to each other in the first direction; the insulating adhesive tape is attached to the separator body in the first direction, and the first adhesive-tape side is provided at a position corresponding to the first separator side; and the insulating adhesive tape is configured to extend from the first separator end to the second separator end in the first direction.

2. The battery separator according to claim 1, wherein the first adhesive-tape side is flush with the first separator side.

3. The battery separator according to claim 1, wherein a spacing between the first adhesive-tape side and the first separator side is less than or equal to 1 mm.

4. The battery separator according to claim 1, wherein the first adhesive-tape end is flush with the first separator end, and the second adhesive-tape end is flush with the second separator end.

5. The battery separator according to claim 1, wherein a width of the insulating adhesive tape in the second direction is 4 mm to 6 mm.

6. The battery separator according to claim 1, wherein a peel strength between the insulating adhesive tape and the separator body is greater than or equal to 0.11 kgf/cm.

7. The battery separator according to claim 1, wherein a puncture strength of the battery separator at a position of the insulating adhesive tape is 2-3 times that of the separator body.

8. The battery separator according to claim 1, wherein the insulating adhesive tape is provided on at least one surface of the separator body in a thickness direction of the separator body.

9. The battery separator according to claim 1, wherein the first separator side and the second separator side both extend in the first direction, and the first separator end and the second separator end both extend in the second direction; and the first adhesive-tape side and the second adhesive-tape side both extend in the first direction, and the first adhesive-tape end and the second adhesive-tape end both extend in the second direction.

10. The battery separator according to claim 1, wherein the second adhesive-tape side is provided adjacent to the second separator side; and the first adhesive-tape end is provided corresponding to the first separator end, and the second adhesive-tape end is provided at a position corresponding to the second separator end.

11. A cell, comprising a positive electrode plate, a negative electrode plate, and a separator; wherein the separator is at least partially provided between the positive electrode plate and the negative electrode plate; the positive electrode plate comprises a first positive-electrode-plate side and a second positive-electrode-plate side provided opposite to each other in a second direction, and a first separator side of the separator is provided on a same side as the first positive-electrode-plate side; a positive electrode tab is provided on the first positive-electrode-plate side, and a negative electrode tab is provided on the negative electrode plate; and the separator is a battery separator according to any one of claims 1-10, the first positive-electrode-plate side is arranged between the first adhesive-tape side and the second adhesive-tape side in the second direction, and the second adhesive-tape side is arranged on the first positive-electrode-plate side and the second positive-electrode-plate side in the second direction.

12. The cell according to claim 11, wherein the first separator side is provided beyond the first positive-electrode-plate side.

13. The cell according to claim 11, wherein a distance between the first separator side and the first positive-electrode-plate side is 1 mm to 2 mm; a distance between the first adhesive-tape side and the first positive-electrode-plate side is 1 mm to 2 mm; and a thickness of the insulating adhesive tape is 20 µm to 30 µm.

14. The cell according to claim 11, wherein a position on the positive electrode plate close to the first positive-electrode-plate side is coated with a ceramic coating, the ceramic coating comprises a first coating side and a second coating side, the first coating side is located between the first adhesive-tape side and the second adhesive-tape side, and the second adhesive-tape side is located between the first coating side and the second coating side.

15. The cell according to claim 14, wherein a spacing between the second coating side and the second adhesive-tape side is 1 mm to 2 mm.

16. The cell according to claim 11, wherein the positive electrode plate is coated with a positive electrode dressing layer, and a distance between a side of the positive electrode dressing layer close to the first positive-electrode-plate side and the second adhesive-tape side is 0 mm to 1 mm.

17. The cell according to claim 11, wherein the positive electrode tab is obtained by die-cutting the positive electrode plate.

18. The cell according to claim 11, wherein the positive electrode plate, the negative electrode plate, the insulating adhesive tape, and the separator are each an integral and continuous sheet, and a core of the cell is formed by stacking and winding the positive electrode plate, the negative electrode plate, and the separator.

19. The cell according to claim 11, wherein the separator is an integral and continuous sheet, there are a plurality of positive electrode plates and a plurality of negative electrode plates, and a core of the cell is formed by folding the separator multiple times and inserting one positive electrode plate or one negative electrode plate between every two neighboring layers of the separator, and the positive electrode plates and the negative electrode plates are alternately disposed; or the core of the cell is formed by winding the separator and inserting one positive electrode plate or one negative electrode plate between every two neighboring layers of the separator, and the positive electrode plates and the negative electrode plates are alternately disposed.

20. A battery pack, comprising a plurality of cells according to any one of claims 11-19.
